# EUROPEAN PATENT APPLICATION

(11) **EP 1 464 570 A1**
(43) Date of publication of application: **06.10.2004**
(21) Application number: 03252040.5
(22) Date of filing: 31.03.2003
(51) Int. Cl.: B62J 29/00

(54) **Rearview mirror assembly for a vehicle**

(71) Applicant: Kwang Yang Motor Co., Ltd., Kaohsiung City (TW)
(72) Inventor: Lin, Tsang-Mao, Kaohsiung City (TW)
(74) Representative: Paget, Hugh Charles Edward

(57) **Abstract**

A rearview mirror assembly includes a mirror-supporting frame (32) formed with a spherical recess (322), a first joint (4) formed with a spherical insert (411) that is received in the spherical recess (322), and a second joint (5) pivoted to the first joint (4) and formed with a tubular part (55). The tubular part (55) is formed with a counter bore (56) and a shoulder (563) within the counter bore (56). A screw bolt (54) extends through the counter bore (56), is adapted to threadedly engage a vehicle (7), and has a head (541) that abuts against the shoulder (563) so as to press the tubular part (55) against the vehicle (7).

## Description

This invention relates to a rearview mirror assembly, more particularly to a rearview mirror assembly for a vehicle.

Conventional rearview mirror assemblies, such as one having a simple structure, normally include a mirror-supporting frame and a supporting rod that is connected to the mirror-supporting frame and that has a threaded end which is adapted to threadedly engage the handle of a vehicle. This type of conventional rearview mirror assembly is disadvantageous in that the extent to which the rearview mirror assembly can be adjusted is too narrow. Moreover, since left and right rearview mirror assemblies cannot be interchanged for this type of rearview mirror assembly, two different molds are required for manufacturing the left and right rearview mirror assemblies.

Other conventional rearview mirror assemblies, such as one having a more complicated structure, include a mirror-supporting frame, a first joint having a threaded end which threadedly engages the mirror-supporting frame so as to permit angular adjustment of the mirror-supporting frame relative to a first axis, an L-shaped linkage pivoted to the first joint so as to permit rotation of the first joint about a second axis which is transverse to the first axis, and a second joint pivoted to the linkage so as to permit rotation of the linkage about a third axis that is parallel to the second axis. The second joint has a threaded end that threadedly engages the handle of a vehicle. This type of conventional rearview mirror assembly is disadvantageous in that threaded engagement between the mirror-supporting frame and the first joint only permits angular adjustment of the mirror-supporting frame relative to the first axis, and that adjustment thereof to some positions requires adjustment of the first joint, the linkage and the second joint, which are laborious and inconvenient.

It would be desirable to be able to provide a rearview mirror assembly that can overcome the aforesaid drawbacks of the prior art.

According to the present invention, there is provided a rearview mirror assembly that comprises: a mirror-supporting frame having a bottom end that is formed with a spherical recess; a first joint extending in a longitudinal direction and having a first pivot end and a second pivot end that is opposite to the first pivot end in the longitudinal direction, the first pivot end being formed with a spherical insert that conforms to and that is received in the recess so as to permit rotation of the mirror-supporting frame relative to the first joint; a second joint extending in the longitudinal direction and having a pivot end and a fixed end that is opposite to the pivot end of the second joint in the longitudinal direction, the second pivot end of the first joint being pivoted to the pivot end of the second joint so as to permit rotation of the first joint relative to the second joint about a first axis that is transverse to the longitudinal direction, the fixed end being formed with a tubular part that has top and bottom ends and that defines a counter bore therein, the counter bore extending through the top and bottom ends of the tubular part in a transverse direction transverse to the longitudinal direction and the first axis, and having an enlarged section that extends from the top end of the tubular part, and a reduced section that extends and that is reduced from the enlarged section to the bottom end of the tubular part, the counter bore being defined by a bore-defining wall that has a shoulder formed between the enlarged and reduced sections, the bottom end of the tubular part being adapted to be seated on the vehicle; and a fastening member including a screw bolt that has a head and a threaded shank extending and reduced from the head. The threaded shank of the screw bolt extends through the counter bore, and is adapted to threadedly engage the vehicle in such a manner that the head is received in the enlarged section of the counter bore and abuts against the shoulder, thereby providing a clamping force to press the tubular part against the vehicle, which, in turn, provides a resistance to rotation of the second joint about a second axis defined by the screw bolt.

In drawings which illustrate embodiments of the invention,
Fig. 1 is an exploded perspective view of the first preferred embodiment of a rearview mirror assembly according to this invention;
Fig. 2 is a perspective view of the rearview mirror assembly of Fig. 1;
Fig. 3 is a perspective view illustrating how the rearview mirror assembly of Fig. 1 is mounted on the handle of a vehicle;
Fig. 4 is a sectional view to illustrate how a tubular part of a second joint of the rearview mirror assembly of Fig. 1 is mounted on a handle of the vehicle;
Fig. 5 is an exploded perspective view of the second preferred embodiment of the rearview mirror assembly according to this invention;
Fig. 6 is a perspective view of the rearview mirror assembly of Fig. 5; and
Fig. 7 is a perspective view to illustrate how the rearview mirror assembly of Fig. 5 is mounted on the handle of a vehicle.

For the sake of brevity, like elements are denoted by the same reference numerals throughout the disclosure.

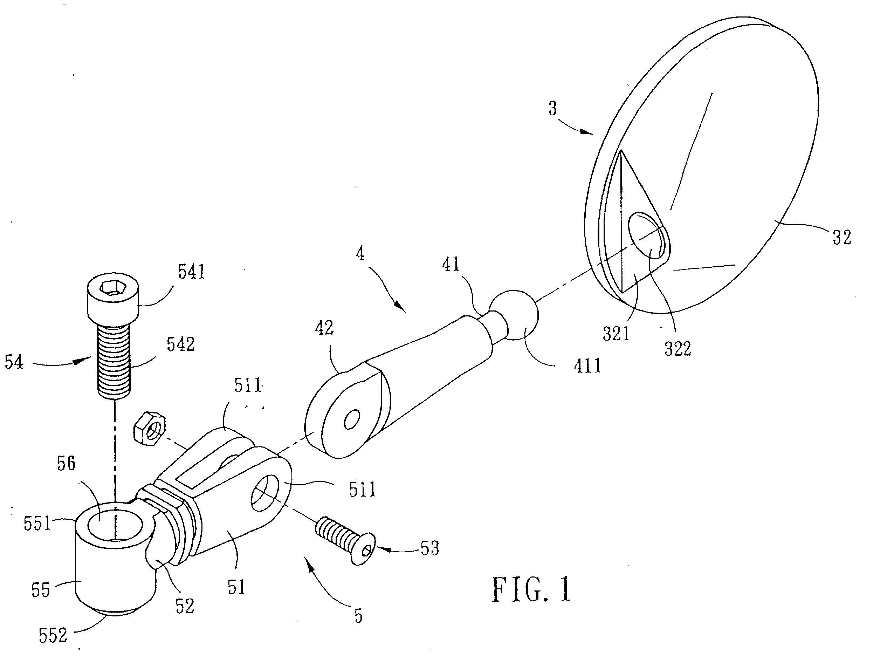

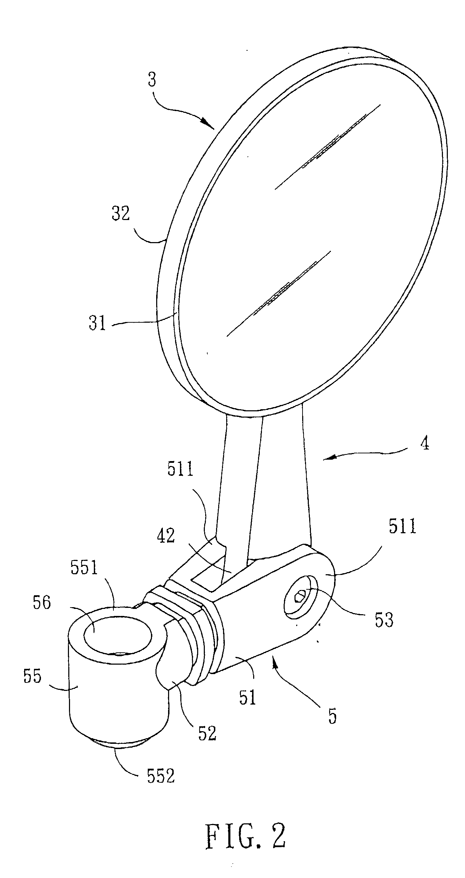

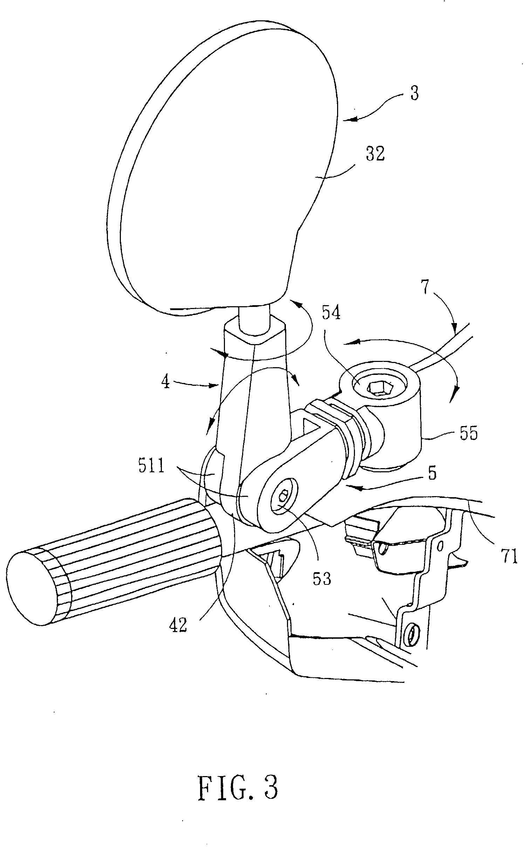

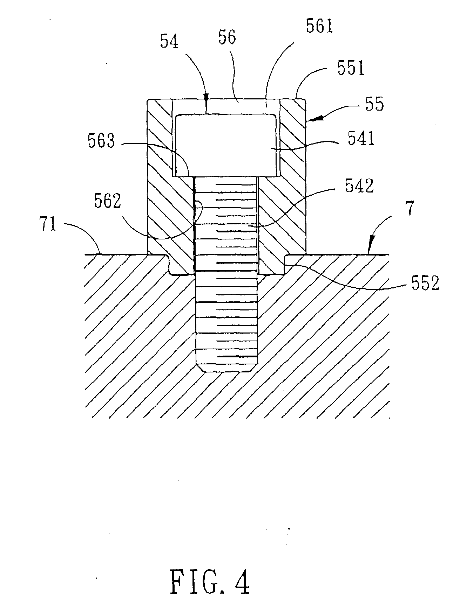

Figs. 1 to 4 illustrate the first preferred embodiment of a rearview mirror assembly according to the present invention for a vehicle 7 (see Fig. 3), such as a motorcycle or a bicycle. The rearview mirror assembly includes: a mirror 3 with a mirror supporting frame 32 and a mirror 31 mounted on the mirror-supporting frame 32, the mirror-supporting frame 32 having a bottom end 321 that is formed with a spherical recess 322; a first joint 4 extending in a longitudinal direction and having a first pivot end 41 and a second pivot end 42 that is opposite to the first pivot end 41 in the longitudinal direction, the first pivot end 41 being formed with a spherical insert 411 that conforms to and that is received in the recess 322 so as to permit rotation of the mirror-supporting frame 32 relative to the first joint 4; a second joint 5 extending in the longitudinal direction and having a pivot end 51 and a fixed end 52 that is opposite to the pivot end 51 of the second joint 5 in the longitudinal direction, the pivot end 51 being formed with two opposing pivot arms 511 that extend in the longitudinal direction and that cooperatively define a receiving space therebetween, the second pivot end 42 of the first joint 4 being received in the receiving space and being pivoted to the pivot arms 511 of the pivot end 51 of the second joint 5 using screw means 53 so as to permit rotation of the first joint 4 relative to the second joint 5 about a first axis that is transverse to the longitudinal direction, the fixed end 52 being formed with a tubular part 55 that has top and bottom ends 551, 552 and that defines a counter bore 56 therein, the counter bore 56 extending through the top and bottom ends 551, 552 of the tubular part 55 in a transverse direction transverse to the longitudinal direction and the first axis, and having an enlarged section 561 that extends from the top end 551 of the tubular part 55, and a reduced section 562 that extends and that is reduced from the enlarged section 561 to the bottom end 552 of the tubular part 55, the counter bore 56 being defined by a bore-defining wall that has a shoulder 563 formed between the enlarged and reduced sections 561, 562, the bottom end 552 of the tubular part 55 being adapted to be seated on a handle 71 of the vehicle 7; and a fastening member including a screw bolt 54 that has a head 541 and a threaded shank 542 extending and reduced from the head 541. The threaded shank 542 of the screw bolt 54 extends through the counter bore 56, and is adapted to threadedly engage the handle 71 of the vehicle 7 in such a manner that the head 541 is received in the enlarged section 561 of the counter bore 56 and abuts against the shoulder 563, thereby providing a clamping force to press the tubular part 55 against the handle 71 of the vehicle 7, which, in turn, provides a resistance to rotation of the second joint 5 about a second axis defined by the screw bolt 54.

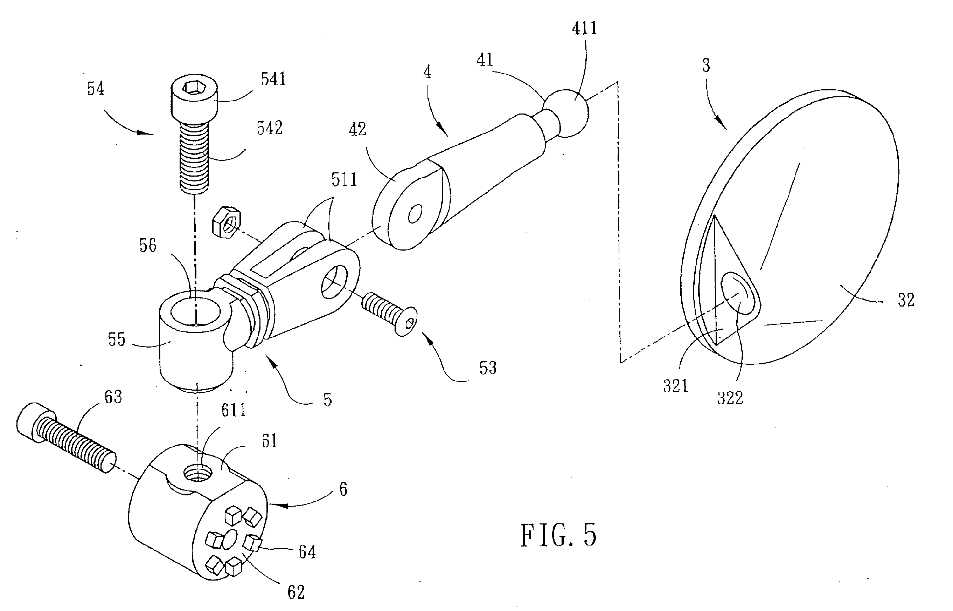

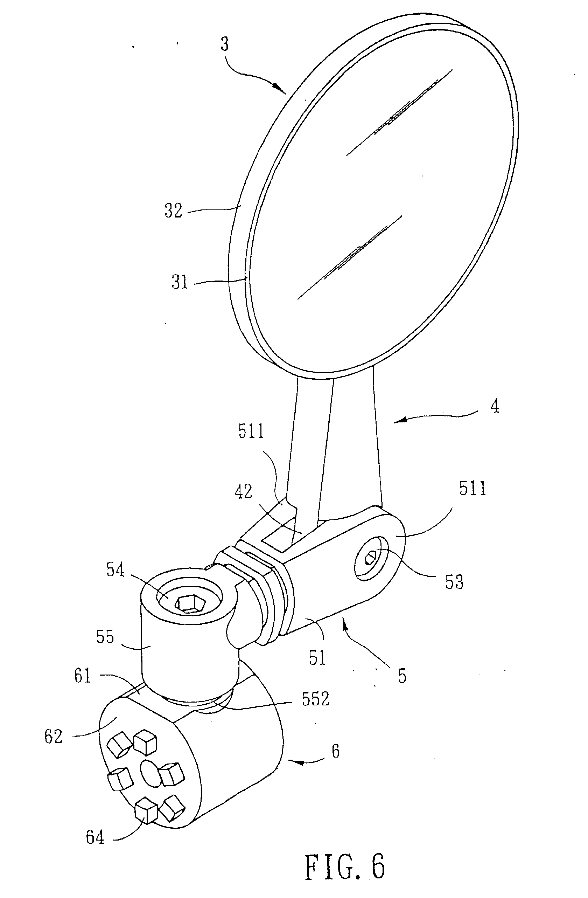

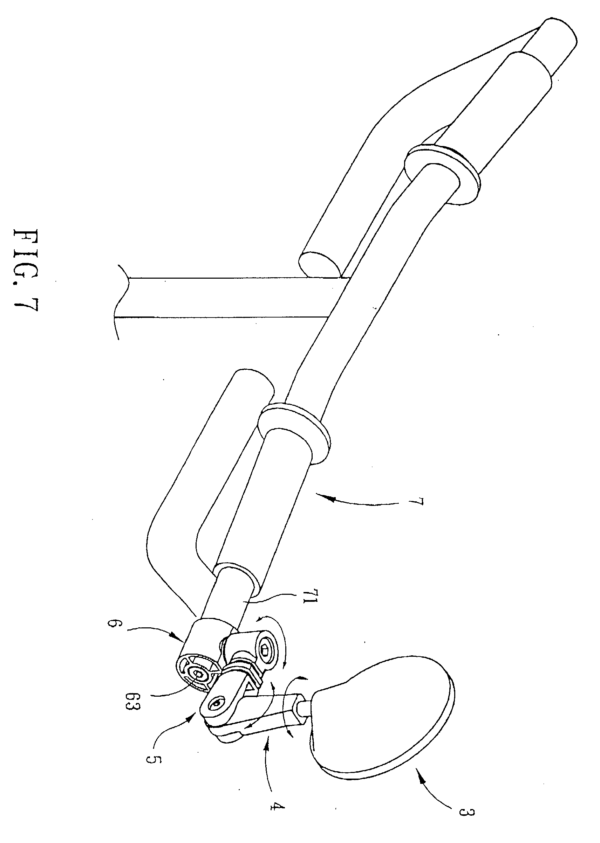

Figs. 5 to 7 illustrate the second preferred embodiment of the rearview mirror assembly according to the present invention. The rearview mirror assembly of this embodiment is similar to the previous embodiment shown in Fig. 1, except that the rearview mirror assembly of this embodiment is mounted on the handle 71 of the vehicle 7 through a mounting seat 6. The mounting seat 6 has a flat top end 61, and is formed with a threaded hole 611 that extends inwardly from the top end 61 of the mounting seat 6. The bottom end 552 of the tubular part 55 is seated on the top end 61 of the mounting seat 6. The threaded shank 542 of the screw bolt 54 extends through the counter bore 56 and into the threaded hole 611 in the mounting seat 6 and threadedly engages the mounting seat 6 so as to secure the second joint 5 to the mounting seat 6.

The mounting seat 6 is secured to the handle 71 of the vehicle 7 using screw means 63, and has a side end face 62 that is transverse to the top end 61 of the mounting seat 6 and that is formed with a plurality of protrusions 64 which are adapted to engage retaining grooves (not shown) in the handle 71 of the vehicle 7.

The structure of the rearview mirror assembly of this invention permits a greater extent of position adjustment of the mirror 3 in an easy manner as compared to the conventional rearview mirror assemblies.

## Claims

1. A rearview mirror assembly for a vehicle (7),
**characterized by**:
a mirror-supporting frame (32) having a bottom end (321) that is formed with a spherical recess (322);
a first joint (4) extending in a longitudinal direction and having a first pivot end (41) and a second pivot end (42) that is opposite to said first pivot end (41) in said longitudinal direction, said first pivot end (41) being formed with a spherical insert (411) that conforms to and that is received in said recess (322) so as to permit rotation of said mirror-supporting frame (32) relative to said first joint (4);
a second joint (5) extending in said longitudinal direction and having a pivot end (51) and a fixed end (52) that is opposite to said pivot end (51) of said second joint (5) in said longitudinal direction, said second pivot end (42) of said first joint (4) being pivoted to said pivot end (51) of said second joint (5) so as to permit rotation of said first joint (4) relative to said second joint (5) about a first axis that is transverse to said longitudinal direction, said fixed end (52) being formed with a tubular part (55) that has top and bottom ends (551, 552) and that defines a counter bore (56) therein, said counter bore (56) extending through said top and bottom ends (551, 552) of said tubular part (55) in a transverse direction transverse to said longitudinal direction and said first axis, and having an enlarged section (561) that extends from said top end (551) of said tubular part (55), and a reduced section (562) that extends and that is reduced from said enlarged section (561) to said bottom end (552) of said tubular part (55), said counter bore (56) being defined by a bore-defining wall that has a shoulder (563) formed between said enlarged and reduced sections (561, 562), said bottom end (552) of said tubular part (55) being adapted to be seated on the vehicle (7) ; and
a fastening member including a screw bolt (54) that has a head (541) and a threaded shank (542) extending and reduced from said head (541), said threaded shank (542) of said screw bolt (54) extending through said counter bore (56) and being adapted to threadedly engage the vehicle (7) in such a manner that said head (541) is received in said enlarged section (561) of said counter bore (56) and abuts against said shoulder (563), thereby providing a clamping force to press said tubular part (55) against the vehicle (7) , which, in turn, provides a resistance to rotation of said second joint (5) about a second axis defined by said screw bolt (54).

2. A rearview mirror assembly adapted to be mounted on a handle (71) of a vehicle (7) , said rearview mirror assembly comprising:
a mirror-supporting frame (32) having a bottom end (321) that is formed with a spherical recess (322) ;
a first joint (4) having a first pivot end (41) and a second pivot end (42) that is opposite to said first pivot end (41), said first pivot end (41) being formed with a spherical insert (411) that conforms to and that is received in said recess (322) so as to permit rotation of said mirror-supporting frame (32) relative to said first joint (4);
a second joint (5) extending in a longitudinal direction and having a pivot end (51) and a fixed end (52) that is opposite to said pivot end (51) of said second joint (5), said second pivot end (42) of said first joint (4) being pivoted to said pivot end (51) of said second joint (5) so as to permit rotation of said first joint (4) relative to said second joint (5) about a first axis that is transverse to said longitudinal direction, said fixed end (52) being formed with a tubular part (55) that has top and bottom ends (551, 552) and that defines a counter bore (56) therein, said counter bore (56) extending through said top and bottom ends (551, 552) of said tubular part (55) in a transverse direction transverse to said longitudinal direction and said first axis, and having an enlarged section (561) that extends from said top end (551) of said tubular part (55), and a reduced section (562) that extends and that is reduced from said enlarged section (561) to said bottom end (552) of said tubular part (55), said counter bore (56) being defined by a bore-defining wall that has a shoulder (563) formed between said enlarged and reduced sections (561, 562);
a fastening member including a screw bolt (54) that has a head (541) and a threaded shank (542) extending and reduced from said head (541) ; and
a mounting seat (6) adapted to be secured to the handle (71) of the vehicle (7), and having a flat top end (61) , said mounting seat (6) being formed with a threaded hole (611) that extends inwardly from said top end (61) of said mounting seat (6);
wherein said bottom end (552) of said tubular part (55) is seated on said top end (61) of said mounting seat (6); and
wherein said threaded shank (542) of said screw bolt (54) extends through said counter bore (56) and into said threaded hole (611) in said mounting seat (6) and threadedly engages said mounting seat (6) in such a manner that said head (541) is received in said enlarged section (561) of said counter bore (56) and abuts against said shoulder (563), thereby providing a clamping force to press said tubular part (55) against said mounting seat (6), which, in turn, provides a resistance to rotation of said second joint (5) about a second axis defined by said screw bolt (54).

3. The rearview mirror assembly of Claim 2, wherein said mounting seat (6) has a side end face (62) that is transverse to said top end (61) of said mounting seat (6) and that is formed with a plurality of protrusions (64) which are adapted to engage the handle (71) of the vehicle (7).
